# EUROPEAN PATENT APPLICATION

(11) **EP 2 677 761 A1**
(43) Date of publication of application: **25.12.2013**
(21) Application number: 13168489.6
(22) Date of filing: 21.05.2013
(51) Int. Cl.: H04N 21/438, H04N 21/4385, H04N 21/442, H04N 21/4425

(54) **Information processor, signal format changing method, program, and image display apparatus**

(30) Priority: 21.06.2012 JP 2012139659
(71) Applicant: Sony Corporation, Tokyo 108-0075 (JP)
(72) Inventor: Ooishi, Katsumi, Minato-ku, Tokyo 108-0075 (JP)
(74) Representative: Berryman, Robert Jan

(57) **Abstract**

An information processor includes: a reception processing portion generating an information signal by executing reception processing for an input signal, and changing a signal format of the information signal being currently outputted over to a different signal format in accordance with a change instruction, thereby outputting the information signal having the different signal format to an external unit; and a control portion receiving the information signal outputted from the reception processing portion, and sending the change instruction to the external unit executing signal processing for the information signal having a signal format adapted to be processed by the external unit itself when the signal processing is not normally executed and generation of a signal processing error is recognized.

## Description

The present disclosure relates to an information processor configured to execute information processing, a signal format changing method of changing a signal format over to a different signal format, a program used in the same, and an image display apparatus configured to carry out display of an image.

A digital satellite broadcasting compatible with a liquid crystal television (FTV: Flat Panel Television) is generally a pay broadcasting. Programs of the pay broadcasting are scrambled (subjected to encryption).

For this reason, for a European model or the like, a card (CAM: Conditional Access Module) used to descramble a pay program is sold. In this case, a slot into which the CAM card is to be inserted is provided in the FTV. When the pay program is contracted, the CAM card is purchased from a pay broadcasting operator. A Smart card to be inserted into the CAM is actually used to descramble the pay program. In a word, the Smart card (which is identical to a B-CAS (Broadcast Satellite-Conditional Access System) card in Japan) is inserted into the CAM which is in turn inserted into the FTV.

A user specially purchases a CAM card supplied by a provider of a pay program which the user desires to view, and then inserts the CAM card thus purchased into the slot of the FTV, thereby viewing the pay program.

A technique with which, when a trouble is generated in processing in an IC (Integrated Circuit) card inserted into a receiver and thus it is impossible to normally descramble a pay program being tuned, the pay program being tuned is switched automatically over to a different program is proposed as the related art. This technique, for example, is described in Japanese Patent Laid-Open No. 2007-235274.

Heretofore, it may be impossible to output a normal video or a normal audio due to the mismatching in format between a signal (TS (Transport Stream) signal) outputted from the CAM in order to descramble the pay program, and a TS signal outputted from a demodulating circuit provided inside the FTV in some cases. A portion in which the mismatching is generated is between the TS signal outputted from the demodulating circuit inside the FTV (more exactly, the TS signal outputted from the demodulating circuit and then inputted to the CAM), and the CAM to which that TS signal is inputted.

The CAM is provided every business operator who provides a pay program. Only a specific TS signal format can be received depending on the CAM in some causes. For this reason, if the format of the TS signal outputted from an image processing portion is not a TS signal format which can be processed with the CAM, then the data (TS signal) is destroyed in a signal processing portion of the CAM. After that, it may be impossible to execute the normal signal processing while that TS signal (which is returned back to the image processing portion) is received and processed. As a result, an abnormality is generated in the image or sound.

The present disclosure has been made in order to solve the problems described above, and it is therefore desirable to provide an information processor which is capable of automatically compensating for mismatching between signal formats, a signal format changing method used therein, a program used therein, and an image display apparatus configured to display thereon an image.

In order to attain the desire described above, according to an embodiment of the present disclosure, there is provided an information processor including: a reception processing portion generating an information signal by executing reception processing for an input signal, and changing a signal format of the information signal being currently outputted over to a different signal format in accordance with a change instruction, thereby outputting the information signal having the different signal format to an external unit; and a control portion receiving the information signal outputted from the reception processing portion, and sending the change instruction to the external unit executing signal processing for the information signal having a signal format adapted to be processed by the external unit itself when the signal processing is not normally executed and generation of a signal processing error is recognized.

According to another embodiment of the present disclosure, there is provided a signal format changing method including: executing reception processing for an input signal to generate an information signal, thereby outputting the information signal thus generated to an external unit executing signal processing for the information signal having a signal format adapted to be processed by the external unit itself; generating a change instruction when the signal processing is not normally executed in the external unit and generation of a signal processing error is recognized; and changing the signal format of the information signal being currently outputted over to a different signal format in accordance with the change instruction.

According to still another embodiment of the present disclosure, there is provided a program causing a computer to execute: reception processing for an input signal to generate an information signal, thereby outputting the information signal thus generated to an external unit executing signal processing for the information signal having a signal format adapted to be processed by the external unit itself; generating a change instruction when the signal processing is not normally executed in the external unit and generation of a signal processing error is recognized; and changing the signal format of the information signal being currently outputted over to a different signal format in accordance with the change instruction.

According to yet another embodiment of the present disclosure, there is provided an image display apparatus including: a demodulating portion executing processing to demodulate a modulated signal containing therein encrypted image information to generate a demodulated signal, and changing a signal format of the demodulated signal being currently outputted over to a different signal format in accordance with a change instruction, thereby outputting the demodulated signal having the different signal format to an external unit; a control portion receiving the demodulated signal outputted from the demodulating portion, and sending the change instruction to the external unit decrypting the demodulated signal having a signal format adapted to be processed by the external unit itself when it is recognized that the decryption is not normally carried out; an image processing portion executing image processing for an output signal from the external unit; and a display portion displaying thereon an image after the image processing.

As set forth hereinabove, according to the present disclosure, it is possible to automatically compensate for the mismatching between the signal formats.

Further particular and preferred aspects of the present invention are set out in the accompanying independent and dependent claims. Features of the dependent claims may be combined with features of the independent claims as appropriate, and in combinations other than those explicitly set out in the claims.

Embodiments of the invention will now be described, by way of example only, with reference to the accompanying drawings in which:
FIG. 1 is a block diagram showing a configuration of an information processor according to a first embodiment of the present disclosure;
FIG. 2 is a block diagram showing a configuration of an FTV;
FIG. 3 is a block diagram showing a configuration of an image display apparatus according to a second embodiment of the present disclosure;
FIG. 4 is a time chart showing an example of a pattern of a format of a TS signal;
FIG. 5 is a time chart showing another example of the pattern of the format of the TS signal;
FIG. 6 is a time chart showing still another example of the pattern of the format of the TS signal;
FIG. 7 is a time chart showing yet another example of the pattern of the format of the TS signal;
FIG. 8 is a flow chart explaining an operation adapted to convert a TS signal format; and
FIG. 9 is a block diagram, partly in view, showing an example of a configuration of hardware of a computer used in each of the embodiments of the present disclosure.

Hereinafter, embodiments of the present disclosure will be described in detail with reference to the accompanying drawings.

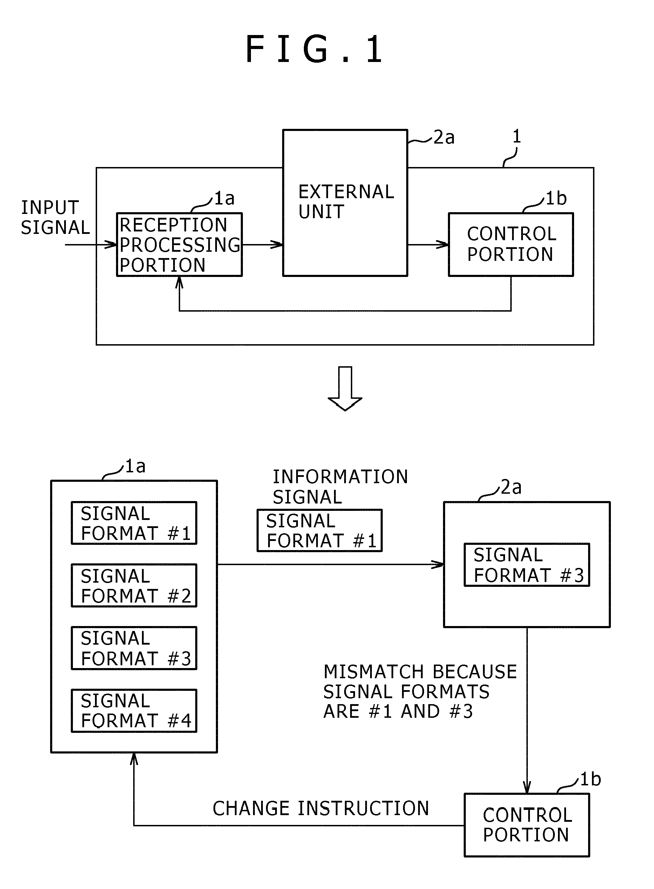

FIG. 1 is a block diagram showing a configuration of an information processor according to a first embodiment of the present disclosure. An information processor 1 includes a reception processing portion 1a and a control portion 1b, and an external unit 2a can be inserted from the outside into the information processor 1. An all-in-one PC (Personal Computer) or the like, for example, corresponds to the information processor 1.

The reception processing portion 1a generates an information signal by executing processing to receive an input signal. Also, the reception processing portion 1a changes a signal format of the information signal which is being currently outputted over to a different signal format to output the resulting information signal having the different signal format to the external unit 2a.

The external unit 2a, for example, is a card-like unit which is adapted to be inserted from the outside into the information processor 1. The external unit 2a receives the information signal which has been outputted thereto from the reception processing portion 1a, and executes signal processing (for example, decryption or the like) for the information signal having the signal format which can be processed by the external unit 2a itself.

When the control portion 1b recognizes that the signal processing is not normally executed for the external unit 2a, and thus a signal processing error is generated, the control portion 1b generates a change instruction and sends the change instruction thus generated to the reception processing portion 1a.

For example, in FIG. 1, it is supposed that the reception processing portion 1a can output the information signal having any one of four signal formats #1 to #4, and the external unit 2a can execute the signal processing for only the information signal having the signal format #3.

When the information signal having the signal format #1 has been transmitted from the reception processing portion 1a to the external unit 2a, since the external unit 2a executes the signal processing for the information signal having the signal format #3, it may be impossible for the external unit 2a to execute the signal processing for the information signal having the signal format #1.

In this case, the control portion 1b recognizes the generation of the signal processing error, and issues an instruction to change the signal format to the reception processing portion 1a. When the reception processing portion 1a receives the change instruction issued thereto, the reception processing portion 1a changes the current signal format #1 over to a different signal format (for example, the signal format #2), and outputs the information signal having the different signal format.

Such an operation is repetitively carried out, which results in that it is possible to obtain matching between the signal format of the information signal which has been transmitted from the reception processing portion 1a, and the signal format which is previously set in the external unit 2a. That is to say, until the signal format of the information signal matches the signal format which is previously set in the external unit 2a, the change instruction is continuously outputted from the control portion 1b, and thus the reception processing portion 1a changes the signal format of the information signal over to the different signal format, and outputs the resulting information signal having the different signal format. Therefore, in the case of the information processor 1 shown in FIG. 1, finally, the information signal having the signal format #3 is outputted from the reception processing portion 1a, and thus the matching is obtained in signal format. By carrying out such control, it becomes possible to automatically compensate for the mismatch between the signal formats.

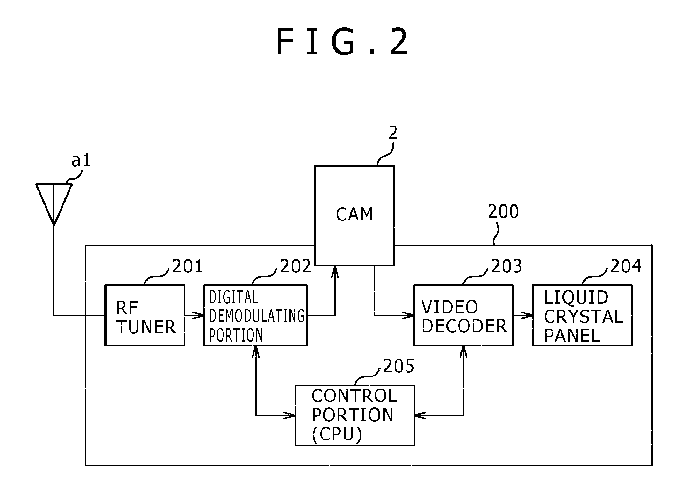

Next, the problems which are to be solved by the technique of the present disclosure will be described. It is noted that in the following description, the external unit 2a is referred to as a CAM 2. The signal format is simply referred to as the format as well. FIG. 2 is a block diagram showing an example of a configuration of an FTV. An existing FTV 200 includes an RF (Radio Frequency) tuner 201, a digital demodulating portion 202, a video decoder 203, a liquid crystal panel 204, a control portion (CPU: Central Processing Unit) 205, and an antenna a1.

An electric wave signal which has been received at the antenna a1 is inputted to the RF tuner 201. The RF tuner 201 down-converts the signal received at the antenna a1, and selects and outputs a signal of a desired channel being tuned.

The digital demodulating portion 202 digitally demodulates the output signal supplied thereto from the RF tuner 201 to generate a TS signal. The digital demodulating portion 202 outputs the TS signal thus generated toward the CAM 2 which is inserted into a slot (not shown) of the FTV 200.

Since the TS signal as a broadcasting program signal was scrambled, when the CAM 2 has received the TS signal transmitted thereto from the digital demodulating portion 202, the CAM 2 carries out descrambling (that is, decryption). The TS signal after completion of the descrambling is transmitted to the video decoder 203.

The video decoder 203 decodes the TS signal outputted thereto from the CAM 2. The liquid crystal panel 204 displays thereon an image corresponding to a video signal obtained through the decoding. The control portion 205 carries out control for the constituent elements, such as the digital demodulating portion 202 and the video decoder 203, which are provided in the FTV 200.

Here, when the format of the TS signal which has been outputted from the digital demodulating portion 202, and the format of the TS signal which can be processed in the CAM 2 do not match each other, the TS signal is destroyed inside the CAM 2 in some cases. In such cases, it may become impossible for a user to view a normal image and listen to a normal sound. In addition, the CAM 2 is designed by utilizing a relatively old technique itself in some cases. Thus, it may be impossible for the CAM 2 to receive some output formats of the TS signal in some cases.

It is noted that the digital demodulating portion 202 outputs the TS signal by carrying out the logically proper operation, and the CAM 2 also outputs the TS signal by carrying out the logically proper operation. Therefore, it is not as if there is an abnormality in both of the circuits: the digital demodulating portion 202; and the CAM 2.

With regard to the phenomenon as described above, delivery and receipt of the signal is not normally carried out in interoperability in which the format of the TS signal outputted within the FTV 200, and the format of the TS signal outputted from the CAM 2 do not match each other. As a result, an abnormality is generated.

In the case where the mismatch between the formats of TS signals was generated, heretofore, when an inquiry from the user was received, a local service representative reselected the format adapted to the CAM 2 causing the problem in the FTV 200, and so forth, thereby coping with such a situation. For this reason, it takes time from a time point at which the inquiry from the user is received to a time point at which the problem is solved. Thus, a more efficient solving method has been desired.

The technique of the present disclosure has been made in the light of such a circumstance, and it is therefore desirable to provide the information processor which detects a data abnormality (error) generated in the CAM 2, and carries out change control in accordance with which the output format from the digital demodulating portion is made in an optimal state, thereby automatically compensating for the mismatch between the signal formats, a signal format changing method used in the same, a program used in the same, and an image display apparatus which displays thereon an image.

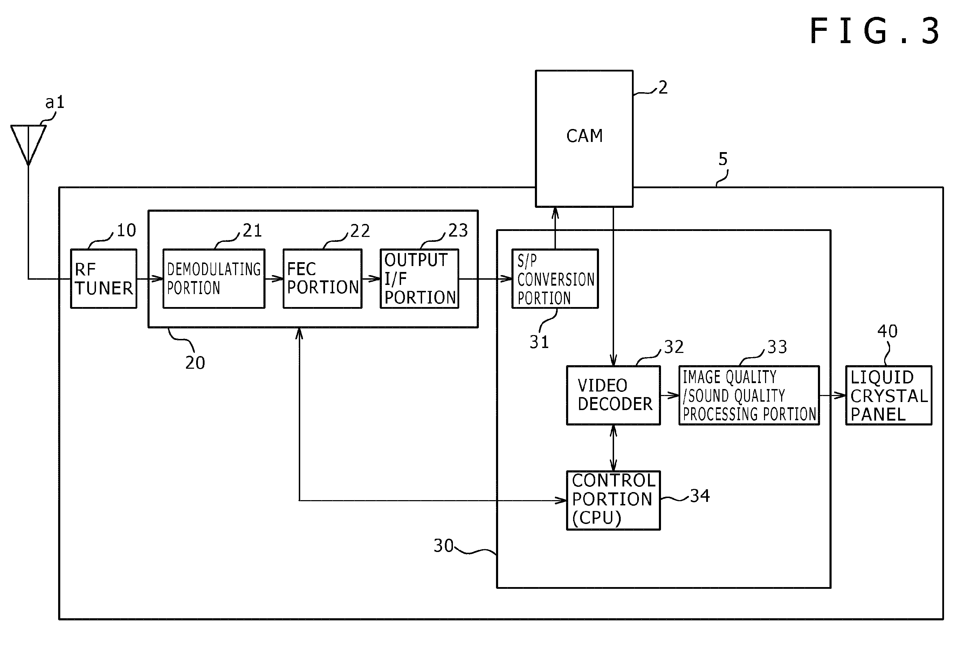

Next, a description will be given with respect to an image display apparatus, according to a second embodiment of the present disclosure, to which the function of the information processor 1 according to the first embodiment of the present disclosure is applied. FIG. 3 is a block diagram showing a configuration of the image display apparatus. An image display apparatus 5 includes an RF tuner 10, a digital demodulating portion 20, an image processing portion 30, a liquid crystal panel 40, and the antenna a1. The image display apparatus 5, for example, corresponds to an FTV.

The digital demodulating portion 20 includes a demodulating portion 21, a FEC (Forward Error Correction) portion 22, and an output I/F (Interface) portion 23. The image processing portion 30 includes an S/P (Serial/Parallel) conversion portion 31, a video decoder 32, an image quality/sound quality processing portion 33, and a control portion (CPU) 34.

It is noted that the image processing portion 30 is configured in the form of an IC. The S/P conversion portion 31, the video decider 32, the image quality/sound quality processing portion 33 configured to optimize information on an image and a sound after completion of decoding, and the control portion 34 configured to carry out the entire control are all included in the IC.

An electric wave signal which has been received at the antenna a1 is inputted to the RF tuner 10. The RF tuner 10 down-converts the signal received at the antenna a1, and selects and outputs a signal of a desired channel being tuned.

The demodulating portion 21 digitally demodulates a modulated signal outputted thereto from the RF tuner 10. The FEC portion 22 carries out correction for transmission error information contained in the digital signal outputted thereto from the demodulating portion 21.

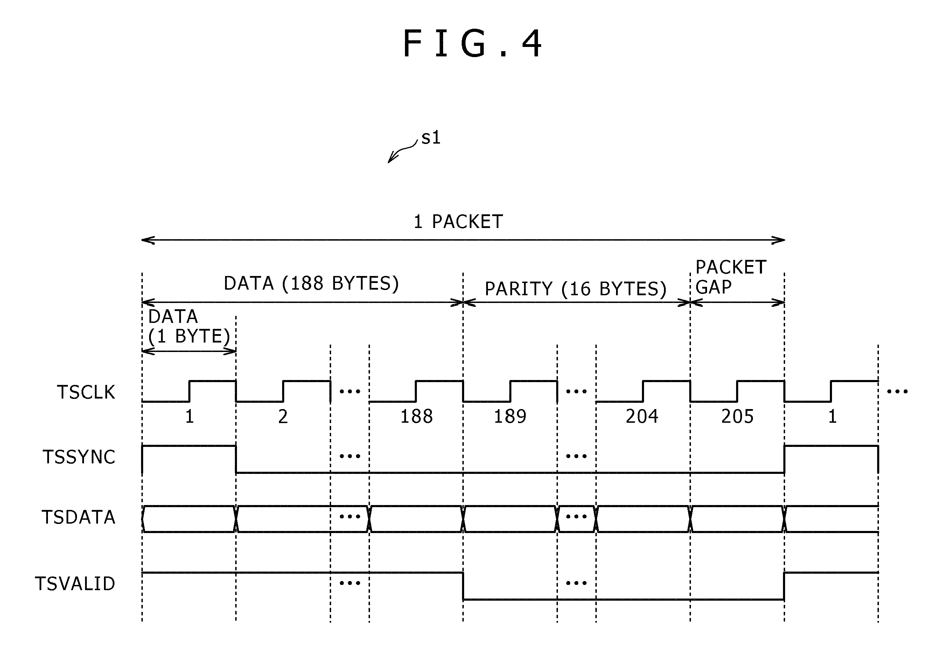

The output I/F portion 23 executes output interface processing for the TS signal after completion of the error correction. Specifically, the output I/F portion 23 suitably changes the format of the digital TS signal over to a different format in accordance with a change instruction issued thereto from the control portion 34, and outputs the digital TS signal having the different format. Examples of a pattern of the format of the TS signal will be described later with reference to FIGS. 4 to 7.

The S/P conversion portion 31 provided inside the image processing portion 30 converts the serial TS signal outputted thereto from the digital demodulating portion 20 into a parallel signal which is in turn transmitted toward the CAM 2 inserted into a slot (not shown) of the image display apparatus 5.

Since the TS signal as a broadcasting program signal was previously scrambled, the CAM 2 executes processing of descrambling the TS signal received thereat as a signal processing. The serial TS signal after completion of the descrambling processing is transmitted from the CAM 2 to the video decoder 32.

It is noted that if the output signal from the CAM 2 is the parallel signal, a constituent element configured to carry out the parallel/serial conversion is provided between the CAM 2 and the video decoder 32. Thus, the TS signal which has been obtained through the parallel/serial conversion is transmitted to the video decoder 32.

The video decoder 32 decodes the TS signal outputted thereto from the CAM 2. The image quality/sound quality processing portion 33 executes predetermined pieces of processing adopted to promote the high image quality and the high sound quality for the decoded signal containing therein both of an image signal and a sound signal. The liquid crystal panel 40 displays thereon an image corresponding to the image signal.

The control portion 34 carries out the control for the constituent elements, such as the digital demodulating portion 20 and the video decoder 32, which are provided in the image display apparatus 5. Specifically, the control portion 34 carries out the control for processing adopted to send initialized data which is necessary in a phase of tuning-ON of a power source to the devices, reception processing, and program viewing processing, or processing adopted to pick up status information from the devices.

For example, the FEC portion 22 has a mechanism in which when the signal transmitted thereto contains error information, and when the FEC portion 22 executes error correcting processing for the error information, there is provided flag information representing whether the error information has been perfectly corrected or an error beyond the correction is still left. For this reason, the control portion 34 executes processing adopted to receive the information from the FEC portion 22 by executing periodically polling processing.

Likewise, the video decoder 32 also has a flag representing presence or absence of an error contained in the information in which the image processing is being executed. Therefore, the control portion 34 executes processing adopted to periodically receive that information.

It is noted that as far as a flow concerned of the TS signal within the image display apparatus 5, the TS signal is temporarily inputted to the image processing portion 30 from the output I/F portion 23, and passes through the S/P conversion portion 31 to be inputted to the CAM 2. The scrambling processing which is previously executed for a pay program is descrambled in the CAM 2, and then the TS signal is returned back to the image processing portion 30. After the TS signal is subjected to the predetermined pieces of processing in both of the video decoder 32 and the image quality/sound quality processing portion 33, an image corresponding to the TS signal is finally displayed on the liquid crystal panel 40.

Next, the format of the TS signal will be described with reference to FIGS. 4 to 7. As far as the format of the TS signal outputted from the digital demodulating portion 20, there are various kinds of formats depending on design constitutions of the devices.

FIGS. 4 to 7 are respectively examples of a pattern of a format of a TS signal. A TS signal s1 shown in FIG. 4 is a packet signal containing therein signals TSCLK, TSSYNC, TSDATA, and TSVALID, and has a parallel format.

TSCLK is a clock signal. TSSYNC is a synchronous signal and indicates a first bit or byte of a TS packet. TSDATA is data.

TSDATA contains therein data of 188 bytes, and a parity of 16 bytes. In this case, the parity of 16 bytes is added after the data of 188 bytes (there may be a case where a parity interval is absent).

TSVALID is a signal representing a valid portion of data. For example, data in which TSVALID is held at an H level is valid while data in which TSVALID is held at an L level is invalid.

It is noted that a packet gap of either several bits or several bytes follows the parity. After end of the parity gap, a packet of the next TS signal will be outputted.

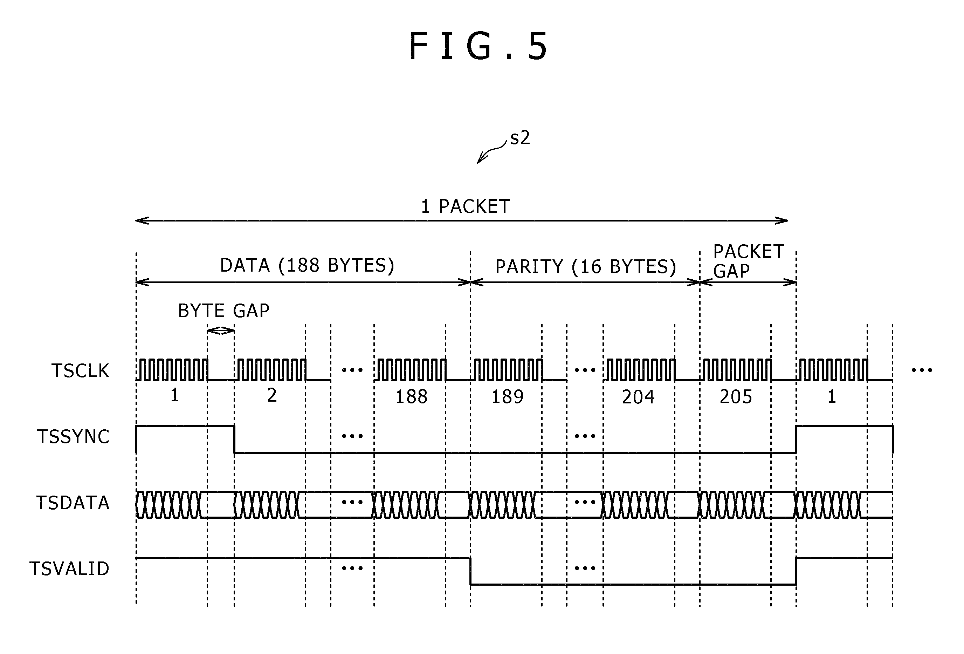

A TS signal s2 shown in FIG. 5 contains therein signals TSCLK, TSSYNC, TSDATA, and TSVALID. The TS signal s2 is a packet signal containing therein data of 188 bytes, a parity of 16 bytes, and a packet gap, and has a serial format. The TS signal s2 shown in FIG. 5 has a format in which even when TSVALID is held at the H level, the output of TSCLK is stopped for invalid data, and TSCLK is held at the L level for an interval of the invalid data (byte gap).

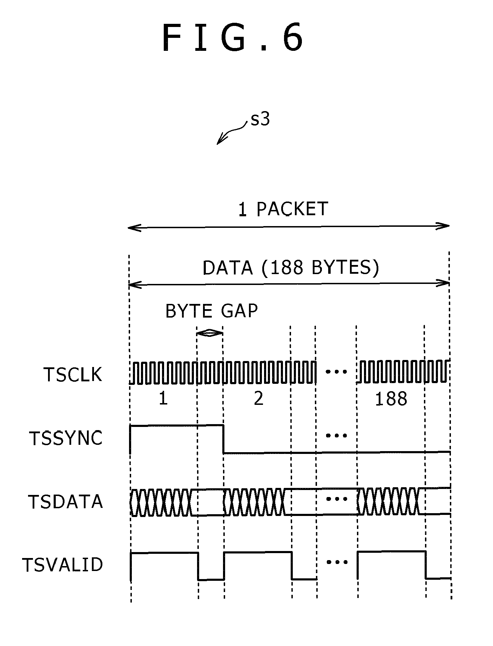

A TS signal s3 shown in FIG. 6 contains therein signals TSCLK, TSSYNC, TSDATA, and TSVALID. The TS signal s3 is a packet signal containing therein data of 188 bytes, and has a serial format. In the case of the TS signal s3 shown in FIG. 6, the TS signal s3 has a format in which although TSCLK is continuously outputted for invalid data, the TSVALID is held at the L level for the interval of the invalid data.

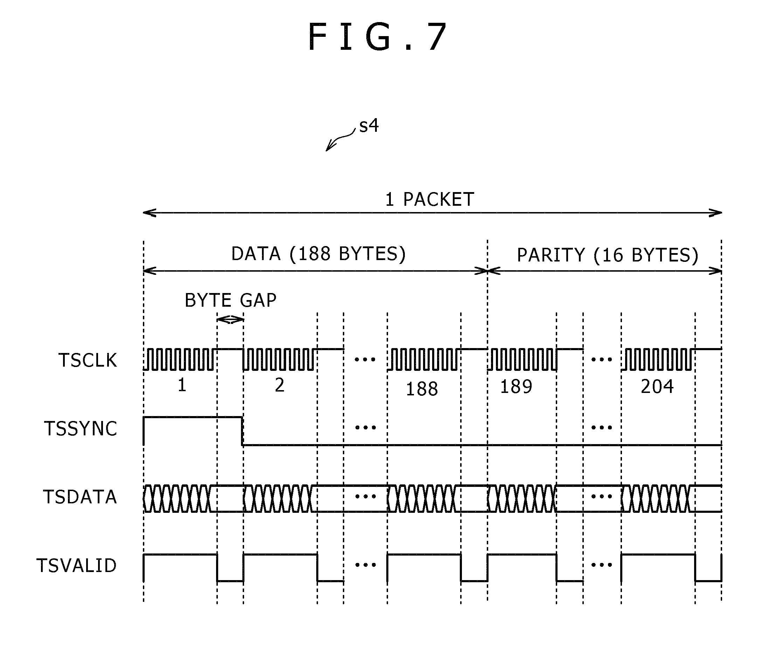

A TS signal s4 shown in FIG. 7 contains therein signals TSCLK, TSSYNC, TSDATA, and TSVALID. The TS signal s4 is a packet signal containing therein data of 188 bytes, and a parity of 16 bytes, and has a serial format. In the case of the TS signal s4 shown in FIG. 7, the TS signal s4 has a format in which the output of TSCLK is stopped for invalid data, and TSCLK is held at the H level and TSVALID is held at the L level for the interval of the invalid data (byte gap).

As described above, the format of the TS signal outputted from the digital demodulating portion 20 adopts various kinds of forms. In the case where the TS signal is outputted so as to have the parallel format (refer to FIG. 4), in the case where the TS signal is outputted so as to have the serial format (refer to FIGS. 5 to 7), or in the case of the individual formats, plural forms are also present with respect to the clock signal (TSCLK), the data (TSDATA), and the control signal (TSSYNC, TSVALID). These forms are changed in accordance with the setting in the output I/F portion 23 of the digital demodulating portion 20.

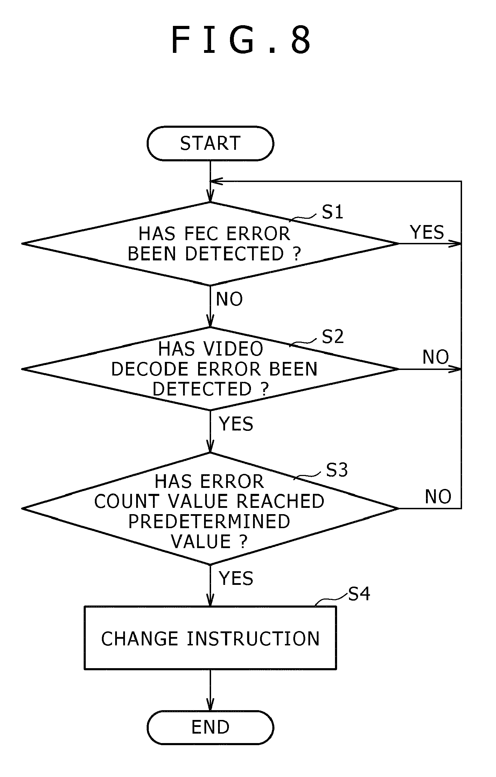

Next, a description will be given with respect to an operation for conversion of the format of the TS signal with reference to FIG. 8. FIG. 8 is a flow chart showing the operation for the conversion of the format of the TS signal.

In processing in Step S1, the control portion 34 carries out detection of an FEC error, and detects presence or absence of generation of an error on a propagation environment.

Here, the transmission error information which has been detected by the FEC portion 22 provided inside the digital demodulating portion 20 is transmitted to the control portion 34. The control portion 34 determines whether all of the transmission errors in the TS signal have been corrected or an error beyond the correction is still left based on the transmission error information transmitted thereto.

Since the transmission error information is suitably updated inside the FEC portion 22, the control portion 34 executes processing adopted to fetch in the transmission error information at suitable intervals. When the control portion 34 recognizes that a transmission error is still left, the error is still left in the processing as well in a subsequent stage, and finally appears in the form of a noise in the image and the sound which are displayed on and outputted from the liquid crystal panel 40.

In this case, it is not as if the format mismatching of the TS signal with the CAM 2 causes the error to be generated. Therefore, the operation returns back to the processing in Step S1. On the other hand, when the control portion 34 recognizes that there is no transmission error any more (all of pieces of the transmission error information have been corrected), the operation proceeds to processing in Step S2.

In the processing in Step S2, the control portion 34 detects the error information which has been transmitted from the video decoder 32.

Here, when some sort of format breach data is present within digital compressed data (such as MPEG 2 (Moving Picture Experts Group 2) format) on the image and the sound whose data is contained in the TS signal, the video decoder 32 can detect this situation based on error detection information present within the compressed data format. The error detection information, for example, includes CRC (Cyclic Redundancy Check) code information, and the like.

When the error information has not been detected by the control portion 34, it is thought that the desired processing has been executed in the CAM 2. That is to say, it is thought that the format of the TS signal outputted from the digital demodulating portion 20, and the format of the TS signal for which the CAM 2 executes the descrambling processing match each other. In this case, the operation returns back to the processing in Step S1.

When in the processing in Step S2, the error information has been detected by the control portion 34, it turns out that although it is determined that the FEC error is absent, an error has been detected by the video decoder 32. In this case, it is thought that the error is generated in the CAM 2 located between the digital demodulating portion 20 and the image processing portion 30.

Therefore, when although the FEC error is absent, the error has been detected in the phase of the processing executed in the video decoder 32, the control portion 34 estimates that there is the mismatch between the format of the TS signal outputted from the digital demodulating portion 20 and the format of the TS signal for which the CAM 2 executes the descrambling processing. Then, the operation proceeds to processing in Step S3.

The control portion 34 has an error counter built therein and, in the processing in Step S3, counts errors in the video decoder 32. The processing in Step S3 is processing adopted to increase estimation accuracy in the processing in Step S2.

When the image display apparatus 5 is in the proper operation state, normally, the probability that an error is generated on a signal path is low. The signal path means a route of the output I/F portion 23 → the S/P conversion portion 31 → the CAM 2 → the video decoder 32.

However, there is also the possibility that some sort of unexpected exogenous noise or the like is generated on the signal path. Therefore, in the control portion 34, such a sporadic failure is excluded so as not to be regarded as the format mismatch between the TS signals.

When an error is generated due to the format mismatch in the TS signal with the CAM 2, a sporadic error is not generated but the error information is transmitted from the video decoder 32 either in a steady basis or periodically. For this reason, when the error information is transmitted from the video decoder 32 to the control portion 34 the predetermined number of times, the control portion 34 recognizes the format mismatch between the TS signals.

When the control portion 34 determines that the number of error counts has not yet reached a predetermined value, the operation returns back to the processing in Step S1. When the control portion 34 determines that the number of error counts has reached the predetermined value, the operation proceeds to processing in Step S4.

In the processing in Step S4, the control portion 34 transmits an instruction to change the format of the TS signal over to a different format to the output I/F portion 23.

The control portion 34 detects the format mismatch between the TS signals the predetermined number of times and thus recognizes that the current format of the TS signal which is outputted from the digital demodulating portion 20 does not match the format of the TS signal which can be processed by the CAM 2.

The control portion 34 then issues an instruction to change the format of the TS signal which is currently being outputted over to a different format to the output I/F portion 23. The output I/F portion 23 carries out the format conversion for the TS signal in accordance with the instruction issued thereto from the control portion 34, and outputs the TS signal having the different format, that is, the new format.

With the new output format thus obtained of the TS signal, the procedure starting from Step S1 is tried again. If the FEC error is absent and the error in the video decoder 32 is also absent, then the format of the TS signal is finally determined as the format of the TS signal at the current time point which is being currently outputted from the output I/F portion 23. In the case where although the FEC error is absent, the error in the video decoder 32 is present, the format of the TS signal will be changed over to another format in accordance with the same procedure as the processing from Step S1 to Step S4.

As has been described so far, the control portion 34 confirms the error information on the data by using both of the digital demodulating portion 20, and the video decoder 32 provided in the subsequent stage of the CAM 2. When there is no error on the side of the digital demodulating portion 20, but an error is detected on the side of the video decoder 32, the control portion 34 regards the signal formats of the TS signals as the mismatch, and thus the signal format of the TS signal from the digital demodulating portion 20 is changed over to a different signal format.

As a result, it becomes possible to automatically compensate for the mismatch between the signal formats. The user thus can view a pay digital program which is scrambled without any inconveniences.

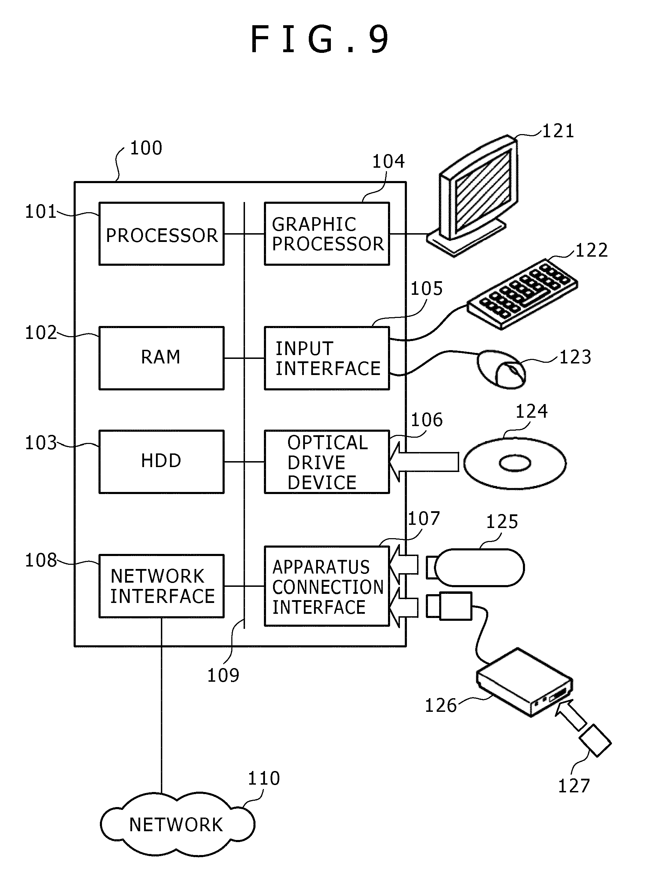

Next, a description will be given with respect to a hardware configuration of a computer of each of the information processor 1 and the image display apparatus 5 with reference to FIG. 9. FIG. 9 is a block diagram, partly in view, showing an example of the configuration of the hardware of the computer which is used in each of the first and second embodiments of the present disclosure. In a computer 100, the entire apparatus is controlled by a processor 101. A RAM (Random Access Memory) 102 and plural peripheral apparatuses are connected to the processor 101 through a bus 109. The processor 101 may be a multiprocessor. The processor 101, for example, is a CPU, an MPU (Micro Processing Unit), a DSP (Digital Signal Processor), an ASIC (Application Specific Integrated Circuit), or a PLD (Programmable Logic Device). The processor 101 may be a combination of two or more elements of the CPU, the MPU, the DSP, the ASIC, and the PLD.

The RAM 102 is used as a main storage device of the computer 100. At least part of a program of an OS (Operating System) or an application program which is caused to be executed by the processor 101 is temporarily stored in the RAM 102. Various kinds of pieces of data which are necessary for the processing executed by the processor 101 are stored in the RAM 102.

The peripheral apparatuses connected to the bus 109 include an HDD (Hard Disk Drive) 103, a graphic processor 104, an input interface 105, an optical drive device 106, an apparatus connection interface 107, and a network interface 108.

The HDD 103 magnetically writes and reads out data to and from a built-in disk. The HDD 103 is used as an auxiliary storage device of the computer 100. The program of the OS, the application program, and various kinds of pieces of data are stored in the HDD 103. It is noted that a semiconductor storage device such as a flash memory can also be used as the auxiliary storage device.

A monitor 121 is connected to the graphic processor 104. The graphic processor 104 causes the monitor 121 to display an image on a screen thereof in accordance with an instruction issued from the processor 101. The monitor 121 includes a display device using a CRT (Cathode Ray Tube), a liquid crystal display device, and the like.

A keyboard 122 and a mouse 123 are connected to the input interface 105. The input interface 105 transmits a signal sent thereto from the keyboard 122 or the mouse 123 to the processor 101. It is noted that the mouse 123 is an example of a pointing device, and any of other pointing devices can also be used instead of using the mouse 123. Other pointing devices include a touch panel, a tablet, a touch pad, a trackball, and the like.

The optical drive device 106 reads out data recorded in an optical disc 124 by using a laser beam or the like. The optical disc 124 is a portable recoding media in which data is recorded so as to be capable of being read out by reflection of a light. The optical disc 124 includes a DVD (Digital Versatile Disc), a DVD-RAM, a CD-ROM (Compact Disc Read Only Memory), a CD-R (Recordable)/RW (ReWritable), and the like.

The apparatus connection interface 107 is a communication interface through which the peripheral apparatuses are connected to the computer 100. For example, a memory device 125 and a memory reader/writer 126 can be connected to the apparatus connection interface 107. The memory device 125 is a recording medium which is loaded with a function of communication made with the apparatus connection interface 107. The memory reader/writer 126 writes data to a memory card 127 or reads out data from the memory card 127. The memory card 127 is a card type recording media.

The network interface 108 is connected to a network 110. The network interface 108 transmits/receives data to/from any other suitable computer or a communication apparatus through the network 110.

By adopting the hardware configuration as described above, it is possible to realize the processing function in the first or second embodiment. When the processing function in the first or second embodiment is realized with a computer, there is provided a program in which the processing content of the function of either the control portion 1b of the information processor 1 or the control portion 34 of the image display device 5 is described.

The program is executed by the computer, whereby the processing function described above is realized on the computer. The program in which the processing content is described can be previously recorded in a computer-readable recording media.

The computer-readable recording media includes a magnetic storage device, an optical disc, a magneto optical recording media, a semiconductor memory, and the like. The magnetic storage device includes an HDD, a FD (Flexible Disk), a magnetic tape, and the like. The optical disc includes a DVD, a DVD-RAM, a CD-ROM/RW, and the like. The magneto optical recording media includes a MO (Magneto Optical) disc, and the like. It is noted that a temporary propagated signal itself is not contained in the recording media in which the program is recorded.

When a program is desired to be distributed, for example, a portable recording media such as a DVD or a CD-ROM in which that program is recorded is sold. The program may be previously stored in a storage device of a server computer, and in this state, that program may be transferred from the server computer to any other suitable computer through a network.

The computer which executes the program, for example, stores either the program recorded in the portable recording media or the program transferred thereto from the server computer in a storage device thereof. The computer reads out the program from the storage device thereof, and executes processing in accordance with the program thus read out.

It is noted that the computer can also directly read out the program from the portable recording media and can also execute the processing in accordance with the program thus read out. In addition, whenever the program has been transferred thereto from the server computer, the computer can also successively execute the processing in accordance with the program thus received.

In addition, at least part of the processing function described above can be realized by an electronic circuit such as a DSP, an ASIC or a PLD.

It is noted that the technique of the present disclosure can also adopt the following constitutions.
(1) An information processor including:
   a reception processing portion generating an information signal by executing reception processing for an input signal, and changing a signal format of the information signal being currently outputted over to a different signal format in accordance with a change instruction, thereby outputting the information signal having the different signal format to an external unit; and
   a control portion receiving the information signal outputted from the reception processing portion, and sending the change instruction to the external unit executing signal processing for the information signal having a signal format adapted to be processed by the external unit itself when the signal processing is not normally executed and generation of a signal processing error is recognized.
(2) The information processor described in the paragraph (1), in which
   the reception processing portion executes processing to detect a transmission error generated in a transmission path of the input signal, thereby informing the control portion of a detection result; and
   when the control portion is not informed of the detection of the transmission error and recognizes the generation of the signal processing error, the control portion considers the signal format of the information signal being outputted from the reception processing portion and the signal format adapted to be processed in the external unit to be a mismatch, and sends the change instruction, thereby matching the signal format of the information signal being outputted from the reception processing portion and the signal format adapted to be processed in the external unit each other.
(3) The information processor described in the paragraph (1) or (2), in which when the number of times of generation of the signal processing error reaches a predetermined number of times, the control portion sends the change instruction.
(4) A signal format changing method including:
   executing reception processing for an input signal to generate an information signal, thereby outputting the information signal thus generated to an external unit executing signal processing for the information signal having a signal format adapted to be processed by the external unit itself;
   generating a change instruction when the signal processing is not normally executed in the external unit and generation of a signal processing error is recognized; and
   changing the signal format of the information signal being currently outputted over to a different signal format in accordance with the change instruction.
(5) A program causing a computer to execute:
   reception processing for an input signal to generate an information signal, thereby outputting the information signal thus generated to an external unit executing signal processing for the information signal having a signal format adapted to be processed by the external unit itself;
   generating a change instruction when the signal processing is not normally executed in the external unit and generation of a signal processing error is recognized; and
   changing the signal format of the information signal being currently outputted over to a different signal format in accordance with the change instruction.
(6) An image display apparatus including:
   a demodulating portion executing processing to demodulate a modulated signal containing therein encrypted image information to generate a demodulated signal, and changing a signal format of the demodulated signal being currently outputted over to a different signal format in accordance with a change instruction, thereby outputting the demodulated signal having the different signal format to an external unit;
   a control portion receiving the demodulated signal outputted from the demodulating portion, and sending the change instruction to the external unit decrypting the demodulated signal having a signal format adapted to be processed by the external unit itself when it is recognized that the decryption is not normally carried out;
   an image processing portion executing image processing for an output signal from the external unit; and
   a display portion displaying thereon an image after the image processing.
(7) The image display apparatus described in the paragraph (6), in which
   the demodulating portion executes processing to detect a transmission error generated on a transmission path of the modulated signal, thereby informing the control portion of a detection result;
   the image processing portion executes processing to detect an image processing error, thereby informing the control portion of a detection result; and
   when the control portion is not informed of the detection of the transmission error and is informed of the detection of the image processing error, the control portion considers the signal format of the demodulated signal being outputted from the demodulating portion and the signal format adapted to be processed in the external unit to be a mismatch, and sends the change instruction, thereby matching the signal format of the demodulated signal being outputted from the demodulating portion and the signal format adapted to be processed in the external unit each other.
(8) The image display apparatus described in the paragraph (6) or (7), in which when the number of times of information of the image processing error reaches a predetermined number of times, the control portion sends the change instruction.

It is noted that with regard to the embodiments described above, various kinds of changes can be made without departing from the subject matter of the embodiments.

In addition, with regard to the embodiments described above, a large number of changes and modifications can occur in those skilled in the art, and thus the present disclosure is by no means limited to the precise constitutions and application examples described above.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

The present disclosure contains subject matter related to that disclosed in Japanese Priority Patent Application JP 2012-139659.

## Claims

1. An information processor comprising:
a reception processing portion generating an information signal by executing reception processing for an input signal, and changing a signal format of the information signal being currently outputted over to a different signal format in accordance with a change instruction, thereby outputting the information signal having the different signal format to an external unit; and
a control portion receiving the information signal outputted from the reception processing portion, and sending the change instruction to the external unit executing signal processing for the information signal having a signal format adapted to be processed by the external unit itself when the signal processing is not normally executed and generation of a signal processing error is recognized.

2. The information processor according to claim 1, wherein
the reception processing portion executes processing to detect a transmission error generated in a transmission path of the input signal, thereby informing the control portion of a detection result; and
when the control portion is not informed of the detection of the transmission error and recognizes the generation of the signal processing error, the control portion considers the signal format of the information signal being outputted from the reception processing portion and the signal format adapted to be processed in the external unit to be a mismatch, and sends the change instruction, thereby matching the signal format of the information signal being outputted from the reception processing portion and the signal format adapted to be processed in the external unit each other.

3. The information processor according to claim 1, wherein when the number of times of generation of the signal processing error reaches a predetermined number of times, the control portion sends the change instruction.

4. A signal format changing method comprising:
executing reception processing for an input signal to generate an information signal, thereby outputting the information signal thus generated to an external unit executing signal processing for the information signal having a signal format adapted to be processed by the external unit itself;
generating a change instruction when the signal processing is not normally executed in the external unit and generation of a signal processing error is recognized; and
changing the signal format of the information signal being currently outputted over to a different signal format in accordance with the change instruction.

5. A program causing a computer to execute:
reception processing for an input signal to generate an information signal, thereby outputting the information signal thus generated to an external unit executing signal processing for the information signal having a signal format adapted to be processed by the external unit itself;
generating a change instruction when the signal processing is not normally executed in the external unit and generation of a signal processing error is recognized; and
changing the signal format of the information signal being currently outputted over to a different signal format in accordance with the change instruction.

6. An image display apparatus comprising:
a demodulating portion executing processing to demodulate a modulated signal containing therein encrypted image information to generate a demodulated signal, and changing a signal format of the demodulated signal being currently outputted over to a different signal format in accordance with a change instruction, thereby outputting the demodulated signal having the different signal format to an external unit;
a control portion receiving the demodulated signal outputted from the demodulating portion, and sending the change instruction to the external unit decrypting the demodulated signal having a signal format adapted to be processed by the external unit itself when it is recognized that the decryption is not normally carried out;
an image processing portion executing image processing for an output signal from the external unit; and
a display portion displaying thereon an image after the image processing.

7. The image display apparatus according to claim 6, wherein
the demodulating portion executes processing to detect a transmission error generated on a transmission path of the modulated signal, thereby informing the control portion of a detection result;
the image processing portion executes processing to detect an image processing error, thereby informing the control portion of a detection result; and
when the control portion is not informed of the detection of the transmission error and is informed of the detection of the image processing error, the control portion considers the signal format of the demodulated signal being outputted from the demodulating portion and the signal format adapted to be processed in the external unit to be a mismatch, and sends the change instruction, thereby matching the signal format of the demodulated signal being outputted from the demodulating portion and the signal format adapted to be processed in the external unit each other.

8. The image display apparatus according to claim 7, wherein when the number of times of information of the image processing error reaches a predetermined number of times, the control portion sends the change instruction.
